# EUROPEAN PATENT APPLICATION

(11) **EP 4 723 043 A1**
(43) Date of publication of application: **08.04.2026**
(21) Application number: 24835244.5
(22) Date of filing: 21.06.2024
(51) Int. Cl.: G06T 13/40

(54) **METHOD FOR PROVIDING DIGITAL HUMAN, SYSTEM, AND COMPUTING DEVICE CLUSTER**

(30) Priority: 06.07.2023 CN 202310827688; 28.11.2023 CN 202311616005
(71) Applicant: Huawei Cloud Computing Technologies Co., Ltd., Guiyang, Guizhou, 550025 (CN)
(72) Inventor: YANG, Changpeng, Guiyang, Guizhou 550025 (CN); DAI, Zonghong, Guiyang, Guizhou 550025 (CN); HUANG, Luzhen, Guiyang, Guizhou 550025 (CN); LI, Minglei, Guiyang, Guizhou 550025 (CN)
(74) Representative: Epping - Hermann - Fischer
(86) International application number: PCT/CN2024/100734
(87) International publication number: WO 2025/007761

(57) **Abstract**

This application provides a digital human providing method and system, and a computing device cluster, and relates to the field of cloud computing technologies. The method can provide a high-definition and smooth real-time digital human image for a user in a media scenario that is based on a real-time audio and video technology, and in particular, can provide a smooth real-time digital human with high picture quality even when network bandwidth is limited and quality of an uplink transmission network differs greatly from quality of a downlink transmission network.

## Description

This application claims priority to Chinese Patent Application No. 202310827688.X, filed with the China National Intellectual Property Administration on July 6, 2023 and entitled "REAL-TIME DIGITAL HUMAN PROVIDING METHOD AND APPARATUS, AND COMPUTING DEVICE CLUSTER", which is incorporated herein by reference in its entirety.

This application claims priority to Chinese Patent Application No. 202311616005.2, filed with the China National Intellectual Property Administration on November 28, 2023 and entitled "DIGITAL HUMAN PROVIDING METHOD AND SYSTEM, AND COMPUTING DEVICE CLUSTER", which is incorporated herein by reference in its entirety.

### TECHNICAL FIELD

This application relates to the field of cloud computing technologies, and in particular, to a digital human providing method and system, a computing device cluster, a computer-readable storage medium, and a computer program product.

### BACKGROUND

A digital human is an image entity that exists in a non-physical world, is created based on artificial intelligence technologies such as computer graphics, graphics rendering, motion capture, deep learning, speech synthesis, and human modeling, and can be driven by a real person or a computer. The digital human is capable of sensing, recognizing, and expressing the physical world, and can implement functions such as human-machine interaction on devices such as an electronic screen, a VR device, and an AR device. Further, information such as a voice, a facial expression, and an action of the real person in the real world may be used to drive, in real time, the digital human to reproduce a same voice, facial expression, and action, so that the driven digital human can present real-time performance of the real person in the real world. Such a digital human may also be referred to as a real-time digital human.

With the development of digital human applications, how to provide a high-definition and smooth real-time digital human for a user in a media scenario that is based on a real-time audio and video technology, such as an online conference, livestreaming, an online class, and a real-time audio and video call, becomes a technical problem that needs to be urgently resolved.

### SUMMARY

This application provides a digital human providing method, to provide a high-definition and smooth real-time digital human image for a user in a media scenario that is based on a real-time audio and video technology, such as an online conference, livestreaming, an online class, or a real-time audio and video call, and in particular, to provide a smooth real-time digital human with high picture quality even in a case of an unstable network state, a weak network, or limited network bandwidth. This application further provides a corresponding system, a computing device cluster, a computer-readable storage medium, and a computer program product.

According to a first aspect, this application provides a digital human providing method. The method includes: A source terminal obtains media data of a real person, where the media data of the real person includes a video and/or audio of the real person; the source terminal extracts, from the media data of the real person, feature data used for describing the real person, where the feature data includes one or more of a facial feature, a morphological feature, and a voice feature of the real person, the facial feature and the morphological feature of the real person are extracted from the video of the real person, and the voice feature of the real person is extracted from the audio of the real person; the source terminal sends the feature data to a cloud server; the cloud server generates media data of a digital human based on the feature data and a multimodal AI-driven model, where the media data of the digital human includes a video and/or audio of the digital human; and the cloud server sends the media data of the digital human to a destination terminal.

In the foregoing method, during uplink transmission, using the feature data to replace the video of the real person reduces bandwidth required for the uplink transmission, so that even though uplink network quality is poor, the feature data can still quickly arrive at the cloud in a lossless manner, to provide a high-definition real-time digital human for a user.

In a possible implementation, that the source terminal obtains the media data of the real person includes: The source terminal obtains the video of the real person based on a specific period. That the source terminal extracts, from the media data of the real person, the feature data used for describing the real person includes: The source terminal extracts, from the video of the real person, the feature data used for describing the real person, where the feature data includes one or both of a change of the facial feature of the real person and a change of the morphological feature of the real person.

In the foregoing implementation, only the feature data that includes the change of the feature and that is in the video of the real person is extracted based on the collection period, so that bandwidth required for uplink transmission of the feature data is further reduced.

In a possible implementation, before the cloud server generates the media data of the digital human based on the feature data and the multimodal AI-driven model, the method further includes: The cloud server obtains input information on the destination terminal, where the input information indicates that the media data of the digital human is generated by the cloud server.

In a possible implementation, the method further includes: The source terminal receives first input information, where the first input information indicates a feature type, and the feature type includes one or more of the facial feature, the morphological feature, and the voice feature. That the source terminal extracts, from the media data of the real person, the feature data used for describing the real person includes: The source terminal extracts target feature data from the media data of the real person, where the target feature data is feature data that is used for describing the real person and that corresponds to the feature type indicated by the first input information.

In a possible implementation, the method further includes: The cloud server obtains second input information on the source terminal, where the second input information indicates a style of the digital human. That the cloud server generates the media data of the digital human based on the feature data and the multimodal AI-driven model includes: The cloud server generates media data of a digital human in a corresponding style based on the feature data, the multimodal AI-driven model, and the second input information.

In a possible implementation, that the cloud server sends the video of the digital human to the destination terminal includes: The cloud server determines a transmission bit rate of the video of the digital human based on a network state of the destination terminal; the cloud server encodes the video of the digital human based on the transmission bit rate of the video of the digital human, where a definition of a first area is different from a definition of a second area in a picture of an encoded video of the digital human; and the cloud server sends the encoded video of the digital human to the destination terminal.

In the foregoing implementation, a definition of a digital human image can be ensured as much as possible by using a generative encoding capability of the cloud when a downlink transmission network is in a poor state, so that a user has better digital human media service experience.

According to a second aspect, this application provides another digital human providing method. The method includes: A source terminal obtains media data of a real person, where the media data of the real person includes a video and/or audio of the real person; the source terminal extracts, from the media data of the real person, feature data used for describing the real person, where the feature data includes one or more of a facial feature, a morphological feature, and a voice feature of the real person, the facial feature and the morphological feature of the real person are extracted from the video of the real person, and the voice feature of the real person is extracted from the audio of the real person; the source terminal sends the feature data to a cloud server; the cloud server sends the feature data to a destination terminal; and the destination terminal generates media data of a digital human based on the feature data and a multimodal AI-driven model, where the media data of the digital human includes a video and/or audio of the digital human.

In the foregoing method, after receiving the feature data transmitted by the source terminal, the cloud transparently transmits the feature data to the destination terminal directly, to further reduce bandwidth required for downlink transmission. Then, the destination terminal locally drives the digital human to generate the media data of the digital human. Finally, when both an uplink transmission network and a downlink transmission network are in a poor state, a high-definition real-time digital human can still be provided for a user.

In a possible implementation, that the source terminal obtains the media data of the real person includes: The source terminal obtains the video of the real person based on a specific period. That the source terminal extracts, from the media data of the real person, the feature data used for describing the real person includes: The source terminal extracts, from the video of the real person, the feature data used for describing the real person, where the feature data includes one or both of a change of the facial feature of the real person and a change of the morphological feature of the real person.

In a possible implementation, before the cloud server sends the feature data to the destination terminal, the method further includes: The cloud server obtains input information on the destination terminal, where the input information indicates that the media data of the digital human is generated by the destination terminal; and the cloud server determines that the destination terminal has a digital human generation capability.

In a possible implementation, the method further includes: The source terminal receives first input information, where the first input information indicates a feature type, and the feature type includes one or more of the facial feature, the morphological feature, and the voice feature. That the source terminal extracts, from the media data of the real person, the feature data used for describing the real person includes: The source terminal extracts target feature data from the media data of the real person, where the target feature data is feature data that is used for describing the real person and that corresponds to the feature type indicated by the first input information.

According to a third aspect, this application provides a digital human providing system. The system includes a source terminal, a cloud server, and a destination terminal. The source terminal is configured to obtain media data of a real person, where the media data of the real person includes a video and/or audio of the real person. The source terminal is further configured to extract, from the media data of the real person, feature data used for describing the real person, where the feature data includes one or more of a facial feature, a morphological feature, and a voice feature of the real person, the facial feature and the morphological feature of the real person are extracted from the video of the real person, and the voice feature of the real person is extracted from the audio of the real person. The source terminal is further configured to send the feature data to the cloud server. The cloud server is configured to generate media data of a digital human based on the feature data and a multimodal AI-driven model, where the media data of the digital human includes a video and/or audio of the digital human. The cloud server is further configured to send the media data of the digital human to the destination terminal.

In a possible implementation, the source terminal is specifically configured to: obtain the video of the real person based on a specific period; and extract, from the video of the real person, the feature data used for describing the real person, where the feature data includes one or both of a change of the facial feature of the real person and a change of the morphological feature of the real person.

In a possible implementation, before the cloud server is configured to generate the media data of the digital human based on the feature data and the multimodal AI-driven model, the cloud server is further configured to obtain input information on the destination terminal, where the input information indicates that the media data of the digital human is generated by the cloud server.

In a possible implementation, the source terminal is further configured to receive first input information, where the first input information indicates a feature type, and the feature type includes one or more of the facial feature, the morphological feature, and the voice feature. That the source terminal is configured to extract, from the media data of the real person, the feature data used for describing the real person specifically includes: The source terminal is configured to extract target feature data from the media data of the real person, where the target feature data is feature data that is used for describing the real person and that corresponds to the feature type indicated by the first input information.

In a possible implementation, the cloud server is further configured to obtain second input information on the source terminal, where the second input information indicates a style of the digital human. That the cloud server is configured to generate the media data of the digital human based on the feature data and the multimodal AI-driven model specifically includes: The cloud server is configured to generate media data of a digital human in a corresponding style based on the feature data, the multimodal AI-driven model, and the second input information.

In a possible implementation, the cloud server is specifically configured to: determine a transmission bit rate of the video of the digital human based on a network state of the destination terminal; encode the video of the digital human based on the transmission bit rate of the video of the digital human, where a definition of a first area is different from a definition of a second area in a picture of an encoded video of the digital human; and send the encoded video of the digital human to the destination terminal.

According to a fourth aspect, this application provides another digital human providing system. The system includes a source terminal, a cloud server, and a destination terminal. The source terminal is configured to obtain media data of a real person, where the media data of the real person includes a video and/or audio of the real person. The source terminal is further configured to extract, from the media data of the real person, feature data used for describing the real person, where the feature data includes one or more of a facial feature, a morphological feature, and a voice feature of the real person, the facial feature and the morphological feature of the real person are extracted from the video of the real person, and the voice feature of the real person is extracted from the audio of the real person. The source terminal is further configured to send the feature data to the cloud server. The cloud server is configured to send the feature data to the destination terminal. The destination terminal is configured to generate media data of a digital human based on the feature data and a multimodal AI-driven model, where the media data of the digital human includes a video and/or audio of the digital human.

In a possible implementation, the source terminal is specifically configured to: obtain the video of the real person based on a specific period; and extract, from the video of the real person, the feature data used for describing the real person, where the feature data includes one or both of a change of the facial feature of the real person and a change of the morphological feature of the real person.

In a possible implementation, before the cloud server is configured to send the feature data to the destination terminal, the cloud server is further configured to: obtain input information on the destination terminal, where the input information indicates that the media data of the digital human is generated by the destination terminal; and determine that the destination terminal has a digital human generation capability.

In a possible implementation, the source terminal is further configured to receive first input information, where the first input information indicates a feature type, and the feature type includes one or more of the facial feature, the morphological feature, and the voice feature. That the source terminal is configured to extract, from the media data of the real person, the feature data used for describing the real person specifically includes: The source terminal is configured to extract target feature data from the media data of the real person, where the target feature data is feature data that is used for describing the real person and that corresponds to the feature type indicated by the first input information.

According to a fifth aspect, this application provides a computing device cluster, including at least one computing device, and each computing device includes a processor and a memory. The processor of the at least one computing device is configured to execute instructions stored in the memory of the at least one computing device, to cause the computing device cluster to perform the digital human providing method corresponding to any one of the first aspect or the possible implementations of the first aspect.

According to a sixth aspect, this application provides another computing device cluster, including at least one computing device, and each computing device includes a processor and a memory. The processor of the at least one computing device is configured to execute instructions stored in the memory of the at least one computing device, to cause the computing device cluster to perform the digital human providing method corresponding to any one of the second aspect or the possible implementations of the second aspect.

According to a seventh aspect, this application provides a computer program product including instructions. When the instructions are run by a computing device cluster, the computing device cluster is caused to perform the digital human providing method corresponding to any one of the first aspect or the possible implementations of the first aspect.

According to an eighth aspect, this application provides another computer program product including instructions. When the instructions are run by a computing device cluster, the computing device cluster is caused to perform the digital human providing method corresponding to any one of the second aspect or the possible implementations of the second aspect.

According to a ninth aspect, this application provides a computer-readable storage medium, including computer program instructions. When the computer program instructions are executed by a computing device cluster, the computing device cluster performs the digital human providing method corresponding to any one of the first aspect or the possible implementations of the first aspect.

According to a tenth aspect, this application provides another computer-readable storage medium, including computer program instructions. When the computer program instructions are executed by a computing device cluster, the computing device cluster performs the digital human providing method corresponding to any one of the second aspect or the possible implementations of the second aspect.

### BRIEF DESCRIPTION OF DRAWINGS

FIG. 1 is a diagram of an architecture of a media transmission network according to an embodiment of this application;
FIG. 2A and FIG. 2B are a diagram of an architecture of a digital human media system according to an embodiment of this application;
FIG. 3 is a schematic flowchart of a digital human providing method according to this application;
FIG. 4 shows an online conference scenario according to an embodiment of this application;
FIG. 5 shows a first UI interaction interface of a digital human media system according to an embodiment of this application;
FIG. 6 shows a second UI interaction interface of a digital human media system according to an embodiment of this application;
FIG. 7 is another schematic flowchart of a digital human providing method according to this application;
FIG. 8 shows another online conference scenario according to an embodiment of this application;
FIG. 9 is a diagram of a digital human providing system according to this application;
FIG. 10 is a diagram of a computing device according to an embodiment of this application;
FIG. 11 is a diagram of a computing device cluster according to an embodiment of this application; and
FIG. 12 is a diagram of an implementation of a computing device cluster according to an embodiment of this application.

### DESCRIPTION OF EMBODIMENTS

The following describes in detail technical solutions provided in this application with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. The following may further include other explicit and implied definitions.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A digital human is an image entity that exists in a non-physical world, is created based on artificial intelligence technologies such as computer graphics, graphics rendering, motion capture, deep learning, speech synthesis, and human modeling, and can be driven by a real person or a computer. The digital human is capable of sensing, recognizing, and expressing the physical world, and can implement functions such as human-machine interaction on devices such as an electronic screen, a VR device, and an AR device. Further, information such as a voice, a facial expression, and an action of the real person in the real world may be used to drive, in real time, the digital human to reproduce a same voice, facial expression, and action, so that the digital human can present real-time performance of the real person in the real world. Such a digital human may also be referred to as a real-time digital human.

With the development of digital human technologies, providing a real-time digital human for a user in a media scenario that is based on a real-time audio and video technology, such as an online conference, livestreaming, an online class, and a real-time audio and video call, has become a hot application direction of digital humans. In the media scenario that is based on the real-time audio and video technology, to provide the real-time digital human for the user, a real person video of a user at a transmit end needs to be collected first, then a digital human video is obtained by driving the digital human based on the real person video, and finally the digital human video is displayed at a receive end, so that a user at the receive end can watch a digital human image having features such as a real-time facial expression and action of the user at the transmit end.

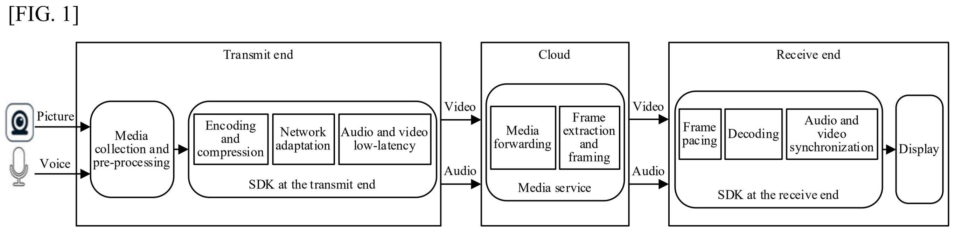

The real-time audio and video technology is a technology in which the user can make an audio and video call in real time through end-to-end collection, encoding, transmission, decoding, rendering, and the like over a network, and is widely used in scenarios such as the online conference, the livestreaming, the online class, the real-time call, a cloud phone, a cloud desktop, and a cloud game. FIG. 1 is a diagram of an end-to-end logical architecture in a media scenario that is based on a real-time audio and video technology. The following describes an application scenario of this application with reference to FIG. 1.

As shown in FIG. 1, an entire media transmission network architecture includes a transmit end, a cloud, and a receive end. The transmit end is responsible for collecting a picture and a voice of a user at the transmit end in real time, the cloud is responsible for forwarding audio and a video that are collected by the transmit end to the receive end, and the receive end is responsible for presenting the picture and the voice of the user at the transmit end to a user at the receive end. For ease of description, audio data and video data in this application are collectively referred to as media data.

After performing processing such as analog signal to digital signal conversion, audio noise reduction, echo cancellation, and video sharpening, a media collection and pre-processing module transmits the media data to an SDK (Software Development Kit, Software Development Kit) at the transmit end. Then, the SDK at the transmit end compresses and encodes the media data to be in a format of a media stream that occupies less memory and facilitates network transmission, and sends processed media data to the cloud.

To ensure that a media data packet can arrive at the receive end in a timely and lossless manner, a low-latency sending module and a network adaptation module are usually further included in the SDK at the transmit end. The low-latency sending module is configured to efficiently package the media data packet, and periodically send the media data packet to a network, to avoid network congestion and a data loss caused by instantaneous large-scale sending. The network adaptation module dynamically adjusts an amount of to-be-sent data by analyzing a current network load, to avoid service lagging and experience deterioration caused by a transmission data loss.

A media service on the cloud is responsible for receiving the media data from the transmit end and forwarding the media data to the receive end.

An SDK at the receive end continuously attempts to receive media data streams transmitted from the cloud, decodes the media data, and displays decoded media data, so that the user at the receive end watches the picture of the user at the transmit end or hear the voice of the user at the transmit end. However, because a network fluctuation exists, and the audio data and the video data are transmitted independently in the network, a case in which a frame of audio data has been collected, but video data of the frame has not been completely collected often occurs. In this case, a frame pacing module is needed to buffer a part of the received data streams, so that to-be-decoded media data can be sent to a decoding module at a relatively stable period. In addition, an audio and video synchronization module is also needed to perform audio and video synchronization. In this way, the picture watched by and the voice heard by the user at the receive end are logical.

The media data needing to be transmitted in a public network is an important basic feature of the real-time audio and video technology. Higher quality of the media data indicates a higher transmission bit rate of the media data and larger network bandwidth required for transmitting the media data. For example, a transmission bit rate corresponding to a video whose definition is 720p and frame rate is 30 fps is approximately 3 Mbps, and a transmission bit rate corresponding to a video whose definition is 1080p and frame rate is 30 fps is approximately 6 Mbps. However, the public network is a complex and changeable environment. During media data transmission, problems such as limited bandwidth, poor network quality (that is, a weak network), and a network fluctuation of a network in which user equipment is located may occur. This limits quality of sent and received media data. For example, picture quality is reduced, a frame rate is reduced, audio stuttering occurs, a picture is even frozen, and a link is disconnected, affecting user perception experience in the media scenario that is based on the real-time audio and video technology.

Further, in the media scenario shown in FIG. 1, transmission of the media data in the public network includes uplink transmission from the transmit end to the cloud and downlink transmission from the cloud to the receive end. With the development of network technologies, the user equipment may access the public network in different manners such as 4G, 5G, Wi-Fi, and a wired network. When a network access manner used by the transmit end is different from a network access manner used by the receive end, quality of the media data received by the user at the receive end is affected by both a state of an uplink transmission network and a state of a downlink transmission network. For example, when the uplink transmission network has limited bandwidth, and supports a low transmission bit rate, picture quality of the video provided by the transmit end is poor. In this case, even though quality of the downlink transmission network is good, the user at the receive end cannot watch a high-quality video picture of the user at the transmit end. Moreover, when the quality of the downlink transmission network is poor, picture quality of the video received by the user at the receive end is further degraded.

Therefore, in the face of a complex and changeable media transmission network, how to provide a high-definition and smooth real-time digital human for the user in the media scenario that is based on the real-time audio and video technology becomes a technical problem that needs to be urgently resolved.

This application provides a digital human providing method, to provide a high-definition and smooth real-time digital human image for a user in a media scenario that is based on a real-time audio and video technology, and in particular, to provide a smooth real-time digital human with high picture quality even when network bandwidth is limited and quality of an uplink transmission network differs greatly from quality of a downlink transmission network.

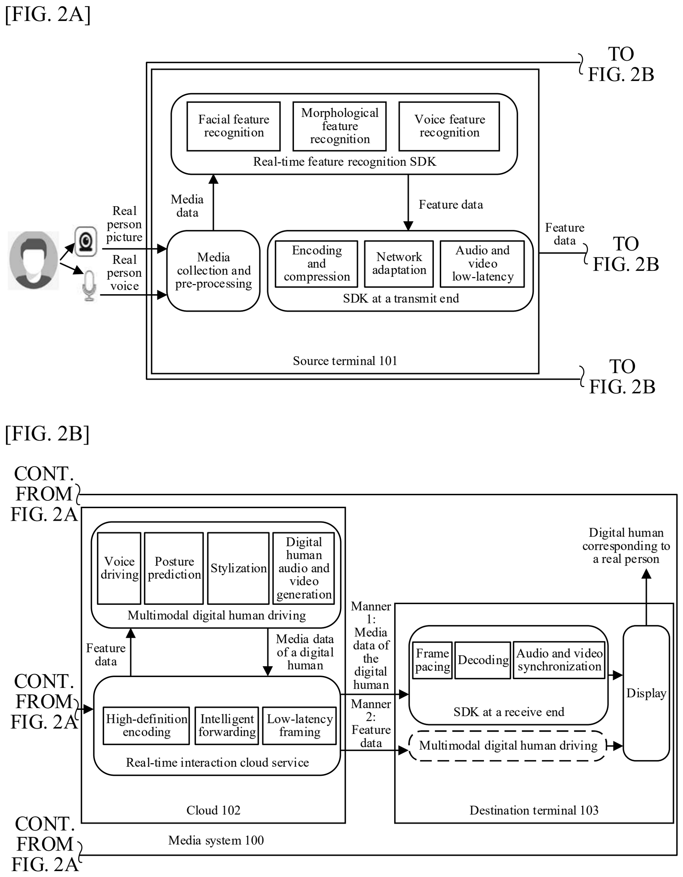

FIG. 2A and FIG. 2B are a diagram of an architecture of a digital human media system 100 according to this application. The system may be configured to implement a digital human providing method provided in this application. For better understanding of the digital human providing method provided in this application, the following first describes the system architecture shown in FIG. 2A and FIG. 2B.

The digital human media system 100 includes a source terminal 101, a cloud server 102, and a destination terminal 103. In this application, the cloud server 102 is also referred to as a cloud 102 for short. The source terminal 101, serving as a transmit end, collects real person media data of a user A, and the destination terminal, serving as a receive end, presents digital human media data of the user A to a user B. For ease of description, in the following, the real person media data of the user A is also referred to as media data of the user A or media data of a real person for short; and the digital human media data of the user A is also referred to as media data of a digital human for short.

The source terminal 101 includes a media collection and pre-processing module, a real-time feature recognition SDK, and an SDK at the transmit end.

The media collection and pre-processing module is configured to continuously collect pictures and voices of a real person, to obtain media data of the real person.

The real-time feature recognition SDK is configured to extract, from the media data of the real person, feature data used for describing the real person. Specifically, the real-time feature recognition SDK obtains feature data including a facial feature of the real person by analyzing and recognizing information such as a facial expression, an eye spacing, and a face width of the real person in a video of the real person; obtains feature data including a morphological feature of the real person by analyzing and recognizing information such as a standing posture, a height, and a body action of the real person in the video of the real person; and obtains feature data including a voice feature of the real person by analyzing and recognizing information such as a spoken text, emotion, and tone of the real person in audio of the real person.

After receiving the feature data extracted by the real-time feature recognition SDK, the SDK at the transmit end can invoke a real-time encoding and transmission capability to encode the feature data and transmit encoded feature data to the cloud 102, to subsequently drive the digital human. The SDK at the transmit end of the source terminal 101 also has a function of the SDK at the transmit end in the conventional media system shown in FIG. 1. For example, the SDK at the transmit end has a capability of encoding and compressing received audio and a received video and then sending processed audio and a processed video to a network, and a network adaptive capability of collecting and adjusting configuration such as an encoding bit rate and an encoding parameter based on a network state. However, different from the function of the SDK at the transmit end in the conventional media system, the SDK at the transmit end of the source terminal 101 can recognize a type of the feature data used for driving the digital human, and perform dedicated transmission optimization on the feature data, for example, perform redundancy protection against a weak network for the feature data, to ensure that data can arrive at the cloud in a deterministic and lossless manner with single transmission, and perform preferential transmission and protection on feature data with a higher importance level and that is required for driving the digital human. In addition, when both the feature data and the audio are used to drive the digital human, the SDK at the transmit end of the source terminal 101 can perform frame timestamp marking on the feature data and the audio that are to be sent to the cloud, and then package and send the feature data and the audio.

The cloud 102 includes a real-time interaction cloud service module and a multimodal digital human driving module.

The real-time interaction cloud service module is configured to receive the feature data and the audio that are sent by the source terminal 101, and perform frame-level synchronization on different types of data based on frame timestamps, to ensure that multi-type data sent to drive the digital human is clock-aligned.

In addition, the real-time interaction cloud service module is configured to send generated media data of the digital human to the destination terminal 103. The real-time interaction cloud service module has capabilities of high-definition encoding, intelligent forwarding, and low-latency framing. The high-definition encoding capability may be used to perform high-definition encoding on audio and a video of the digital human generated by the cloud, and then transmit encoded audio and an encoded video. The low-delay framing capability may be used to efficiently package and send the audio data and the video data in a unit of a frame based on a delay requirement when the media data of the digital human is sent to the destination terminal 103. The intelligent forwarding capability of the real-time interaction cloud service module includes: When the destination terminal 103 does not have a digital human generation capability, the real-time interaction cloud service module sends the media data of the digital human generated by the multimodal digital human driving module to the destination terminal 103; when the destination terminal 103 has a complete real-time digital human generation capability, the real-time interaction cloud service module may directly, stably, and quickly forward, to the destination terminal 103 in a transparent transmission manner, the feature data and the compressed audio that are sent by the source terminal 101; and when the destination terminal 103 has a partial digital human generation capability, the real-time interaction cloud service module may send, to the destination terminal 103 in combination with digital human capability recognition at the receive end, digital human driving delivery configuration on the cloud, and an actual data type, a part of feature data that can be used by the destination terminal 103 to perform digital human driving processing, and a part of processing results generated by the digital human driving module on the cloud.

The multimodal digital human driving module is configured to provide a multimodal AI-driven model. The model can drive the digital human by using the feature data, to generate the video and the audio of the digital human. Specifically, the multimodal AI-driven model can perform processing such as voice driving, posture prediction, and stylization on the digital human based on the feature data, so that the driven digital human presents performance of the real person in the real world.

An SDK at the receive end of the destination terminal 103 completely has a function of processing the media data of the SDK at the receive end in the conventional media system in FIG. 1, and a difference lies only in that the SDK at the receive end of the destination terminal 103 processes the media data of the digital human. Details are not described herein.

When the destination terminal 103 has the digital human generation capability, the destination terminal 103 may further include the multimodal digital human driving module on the cloud, which is not repeatedly shown in FIG. 2A and FIG. 2B. Specifically, when the destination terminal has the partial digital human generation capability, the multimodal digital human driving module on the cloud may be only responsible for pre-processing work of the digital human, for example, performing processing such as data initialization and bone posture correction on the digital human, and then sending, to the destination terminal 103, a pre-processing result on the cloud and feature data required by the destination terminal 103 for subsequent processing, to finally generate the media data of the digital human.

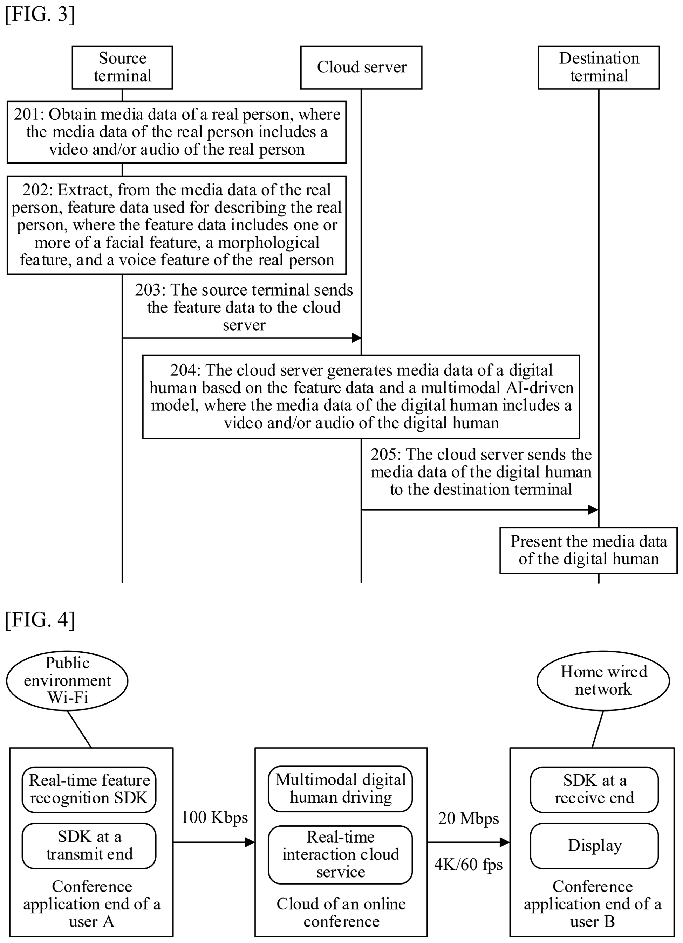

FIG. 3 shows a first implementation procedure of a digital human providing method according to this application, including the following step 201 to step 205.

Step 201: A source terminal obtains media data of a real person, where the media data of the real person includes a video and/or audio of the real person.

After a user A accesses a digital human media service through the source terminal 101, a media collection and pre-processing module continuously collects pictures and voices of the user A and obtains video data and audio data of the user A through analog signal to digital signal conversion.

In actual application, a type of the media data that is of the real person and that is obtained by the media collection and pre-processing module is related to a selection of the user A. When the user A chooses to turn on a camera to enter the digital human media service, the media data that is of the real person and that is obtained by the source terminal 101 includes the video of the real person. When the user A chooses to turn on a microphone to enter the digital human media service, the media data that is of the real person and that is obtained by the source terminal 101 includes the audio of the real person. When the user A chooses to turn on both the camera and the microphone to enter the digital human media service, the media data that is of the real person and that is obtained by the source terminal 101 includes the video and the audio of the real person.

In addition, a type of the media data obtained by a real-time feature recognition SDK is also related to a selection of the user A. When the user A chooses to present an original voice of the user A and a digital human picture to a user B, the media collection and pre-processing module may send only the video data to the real-time feature recognition SDK, and directly send the audio data to an SDK at a transmit end to transmit the audio data to a cloud. When the user A chooses to present a voice and an image of a digital human to the user B, the media collection and pre-processing module may send both the video data and the audio data to the real-time feature recognition SDK. When the user A chooses to present the original voice of the user A and the digital human picture to the user B, and also expects that a mouth shape of the digital human in the digital human picture better matches performance during real person speaking, the media collection and pre-processing module may send the video data and the audio data to the real-time feature recognition SDK, and also send the audio data to the SDK at the transmit end to transmit the audio data to the cloud.

Step 202: The source terminal extracts, from the media data of the real person, feature data used for describing the real person, where the feature data includes one or more of a facial feature, a morphological feature, and a voice feature of the real person. The facial feature and the morphological feature of the real person are extracted from the video of the real person, and the voice feature of the real person is extracted from the audio of the real person.

The facial feature of the real person may include one or more of the following information: a facial expression, a face shape, an eye spacing, a face width, a face height, a facial shape, and facial distribution of the real person. The morphological feature of the real person may include one or more of the following information: a height, a shoulder width, a posture, and a body action of the real person. The voice feature of the real person may include one or more of the following information: a spoken text, emotion, tone, timbre, and intonation of the real person. The information included in the facial feature, the morphological feature, or the voice feature of the real person is also referred to as feature information.

In a possible embodiment, the real-time feature recognition SDK may analyze the video of the real person by using a visual AI technology, recognize facial feature information and morphological feature information of the real person, and record the facial feature information and the morphological feature information as facial feature data and morphological feature data.

In a possible embodiment, the real-time feature recognition SDK may analyze the audio of the real person by using a voiceprint recognition AI technology, recognize voice feature information of the real person, and record the voice feature information as voice feature data.

Specifically, the facial feature information, the morphological feature information, and the voice feature information of the real person are recognized by separately tracking a plurality of facial feature points, a plurality of morphological feature points, and a plurality of voice feature points of the real person. For example, a person has different mouth shapes in different facial expressions, and position information of points on a mouth contour of a real person may reflect the mouth shape of the person.

In actual application, a quantity of feature points may be dynamically configured by a user based on a hardware capability of a terminal-side device, data precision required for digital human driving, and the like. Any representative point that helps recognize a behavior feature of the real person can be selected. This application does not constitute a limitation on points at specific positions on the body or the face of the real person serving as feature points.

When the user A initially enters the digital human media service, the source terminal 101 needs to extract full feature point information, and corresponding feature data is static feature data. After the user A enters the digital human media service, the media collection and pre-processing module usually obtains video pictures of the user A based on a specific collection period, in other words, collects a frame of picture at a specific time interval. In this case, in a service process, the source terminal only needs to extract, from the video of the real person, dynamic feature data that reflects a change of the feature information, where the dynamic feature data may include one or both of a change of the facial feature and a change of the morphological feature of the real person.

For example, when the user performs a hand lifting action, a position of a feature point of a part such as a palm, an arm, or a joint of the user changes. Based on the collection period, the real-time feature recognition SDK only needs to recognize a change of a position of the feature point in a current frame of picture compared with that in a previous frame of picture. Specifically, the dynamic feature data may be recorded by using a displacement vector to represent a position change of the feature point in a reference system. When the real-time feature recognition SDK extracts the dynamic feature data, recognition precision may be configured to filter an insignificant change of the feature point and a recognition error.

Step 203: The source terminal sends the feature data to the cloud server.

After extracting the feature data, the real-time feature recognition SDK transfers the feature data to the SDK at the transmit end of the source terminal. Then, the SDK at the transmit end invokes a real-time encoding and compression capability to transmit the feature data to the cloud server.

In the foregoing method, after extracting the feature data from the media data of the real person, the source terminal only needs to transmit the feature data to the cloud to drive the digital human. An amount of the feature data is far less than an amount of initial media data, and network bandwidth required for transmitting the feature data is also far less than network bandwidth for transmitting the initial media data. Therefore, when uplink network bandwidth of the source terminal 101 is limited, uplink data can still quickly arrive at the cloud in a lossless manner. For example, network bandwidth required for transmitting a video whose transmission definition is 720p and frame rate is 30 fps is approximately 3 Mbps, and network bandwidth required for transmitting feature data extracted from the video is only 60 Kbps to 80 Kbps. In addition, when the feature data is the dynamic feature data that includes only the change of the feature information, an amount of the feature data is further reduced, so that bandwidth required for uplink transmission can be further reduced.

Step 204: The cloud server generates media data of the digital human based on the feature data and a multimodal AI-driven model, where the media data of the digital human includes a video and/or audio of the digital human.

After receiving the feature data transmitted by the SDK at the transmit end, a multimodal digital human driving module inputs the feature data and a digital human in a digital human asset library into the multimodal AI-driven model. The AI-driven model can drive the digital human by using the feature data to enable the digital human to look and sound like a human user, and invoke a real-time audio and video generation capability to obtain the video and the audio of the driven digital human.

Specifically, the multimodal AI-driven model has a voice driving capability, to be specific, may drive, based on the voice feature data or the audio, a mouth shape and a facial expression of the digital human to match corresponding speech content and tone, and generate the audio of the digital human based on the voice feature data. The multimodal AI-driven model has a posture prediction capability, to be specific, may drive, based on the morphological feature data, the digital human to perform a same action as the real person. The multimodal AI-driven model has a stylization capability, to be specific, may drive, based on the facial feature data and the morphological feature data, the digital human to look like the real person.

In a possible embodiment, the multimodal AI-driven model may be obtained by performing offline training based on a large amount of media data of the real person by using a deep learning algorithm.

When the user A chooses to present the original voice of the user A and the digital human picture to the user B, the media data of the digital human generated by the cloud server includes only the video of the digital human. When the user A chooses to present the voice and the picture of the digital human to the user B, the media data of the digital human generated by the cloud server includes the video and the audio of the digital human. When the user chooses to present only the voice of the digital human to the user B, the media data of the digital human generated by the cloud server includes only the audio of the digital human.

An implementation of generating the video of the digital human by the cloud server further includes the following several application scenarios.

In a possible scenario, the media data obtained by the real-time feature recognition SDK in step 201 includes the video, and the feature data extracted in step 202 includes one or both of the facial feature and the morphological feature. In this case, in step 204, the multimodal AI-driven model generates the video of the digital human based on one or both of the facial feature and the morphological feature.

In another possible scenario, the media data obtained by the real-time feature recognition SDK in step 201 includes the video and the audio, and the feature data extracted in step 202 includes the voice feature and one or both of the facial feature and the morphological feature. In this case, in step 204, the multimodal AI-driven model generates the video of the digital human based on the voice feature and the one or both of the facial feature and the morphological feature. Specifically, the multimodal AI-driven model drives, by using the voice feature, a mouth shape of the digital human in a digital human video picture to match performance during real person speaking, and drives, by using one or both of the facial feature and the morphological feature, the digital human in the digital human video picture to look like the real person.

In another possible scenario, the media data obtained by the real-time feature recognition SDK in step 201 includes the audio, and the feature data obtained in step 202 includes the voice feature. In this case, in step 204, the multimodal AI-driven model generates the video of the digital human based on the voice feature. Specifically, the multimodal AI-driven model drives, by using the voice feature, a mouth shape of the digital human in a digital human video picture to match performance during real person speaking.

Step 205: The cloud server sends the media data of the digital human to a destination terminal.

After encoding the media data of the digital human by invoking a high-definition encoding capability, a real-time interaction cloud service module on the cloud sends encoded media data of the digital human to the destination terminal over a downlink transmission network for presentation.

Because a transmission bit rate that is of a video and that can be allowed for different network states varies, the cloud first needs to determine a transmission bit rate of the video of the digital human based on a network state of the destination terminal, then encodes the video of the digital human based on the transmission bit rate, and finally send an encoded video of the digital human to the destination terminal. For example, when network bandwidth of the destination terminal is limited, a downlink network can only support transmission of a video with a low bit rate. In this case, the cloud encodes the video of the digital human into a low-definition video, to reduce a transmission bit rate of the encoded video of the digital human, so that the encoded video of the digital human can be transmitted to the destination terminal over the downlink network. When the network state of the destination terminal becomes better and the bandwidth is not limited, the downlink network can support transmission of a video with a high bit rate. In this case, the cloud can encode the video of the digital human into a high-definition video, and the encoded high-definition video can still be transmitted to the destination terminal over the downlink network.

In the foregoing method, although the network bandwidth of the source terminal 101 is limited, because the feature data can still arrive at the cloud 102 in a lossless manner, after the cloud 102 drives, by using the feature data, the digital human to generate the media data of the digital human, the cloud 102 may invoke the high-definition encoding capability to transmit a high-definition and high-frame-rate video and high-quality audio to the destination terminal 103 provided that the network state of the destination terminal 103 is good. In this way, it is ensured that the digital human picture of the user A watched by the user B is high-definition and smooth, and the voice of the digital human heard by the user B is clear and continuous.

In this embodiment of this application, the cloud may further perform generative encoding on the video of the digital human. In other words, after content of different areas in the digital human video picture is analyzed, different areas in the digital human video picture can be encoded into different definitions.

For example, the digital human video picture generated by the multimodal digital human driving module includes a digital human area and a background area, and a definition of the digital human area is the same as a definition of the background area. When the transmission bit rate of the encoded video of the digital human needs to be reduced due to the limited network bandwidth of the destination terminal 103, the real-time interaction cloud service module may reduce only the definition of the background area during encoding, and maintain the original definition of the digital human area. In this way, it is ensured that the encoded video of the digital human has a low bit rate and can be transmitted in a network with limited bandwidth, and a digital human image of the user A watched by the user B is still high-definition. Specifically, the real-time interaction cloud service module may reduce the definition of the background area by reducing precision of video data corresponding to the background area or adjusting resolution of the background area.

In another possible embodiment, to further reduce the transmission bit rate of the encoded video of the digital human, in addition to reducing the definition of the background area, a definition of a body area of the digital human may further be reduced. In this case, a definition of a facial area and the definition of the body area of the digital human are also different.

For a conventional video encoding mode, definitions of different areas in a picture of an encoded video are the same. When a transmission bit rate of the video needs to be reduced, a definition of the entire picture of the video is reduced. In the foregoing method, a definition of a digital human image can be ensured as much as possible by using a generative encoding capability of the cloud when a downlink transmission network is in a poor state, so that the user has better digital human media service experience.

In addition, when the media data of the digital human generated by the multimodal digital human driving module includes the video and the audio of the digital human, the real-time interaction cloud service module may invoke a low-delay framing capability to package video data and audio data of the digital human in a unit of a frame and send the packaged video data and audio data to the destination terminal.

The following uses an online conference scenario shown in FIG. 4 as an example to describe network transmission advantages of the foregoing first implementation procedure. In the scenario shown in FIG. 4, a user A and a user B participate in a same online conference by using respective conference application ends. The user A accesses the conference via public environment Wi-Fi, and the network of the user A is in a poor state and uplink transmission bandwidth is limited. The user B accesses the conference over a home wired network, and the network of the user B is in a good state and downlink transmission bandwidth is sufficient.

After the conference starts, the conference application end of the user A continuously extracts, from a collected video picture, feature data including information such as a facial expression and an action of the user A. Because an amount of the feature data is small, bandwidth required for transmission is only approximately 100 Kbps. Therefore, even though uplink network bandwidth of the user A is limited to 1 Mbps, the feature data can still be quickly transmitted by the conference end of the user A to a conference service on a cloud in a lossless manner. After the cloud drives a digital human by using the feature data and generates a video of the digital human, because downlink network bandwidth of the user B is sufficient, the cloud may adaptively transmit a 4K high-definition digital human video whose frame rate is 60 fps to the conference application end of the user B by using a bit rate of 20 Mbps. Finally, in the scenario shown in FIG. 4, even though the uplink network bandwidth of the user A is limited, in the method of this application, a high-definition and smooth digital human picture of the user A can still be provided for the user B, to ensure conference experience of the user B.

The following uses an online conference scenario as an example to describe a UI interaction interface provided for a user in this application when the user uses the foregoing digital human providing method.

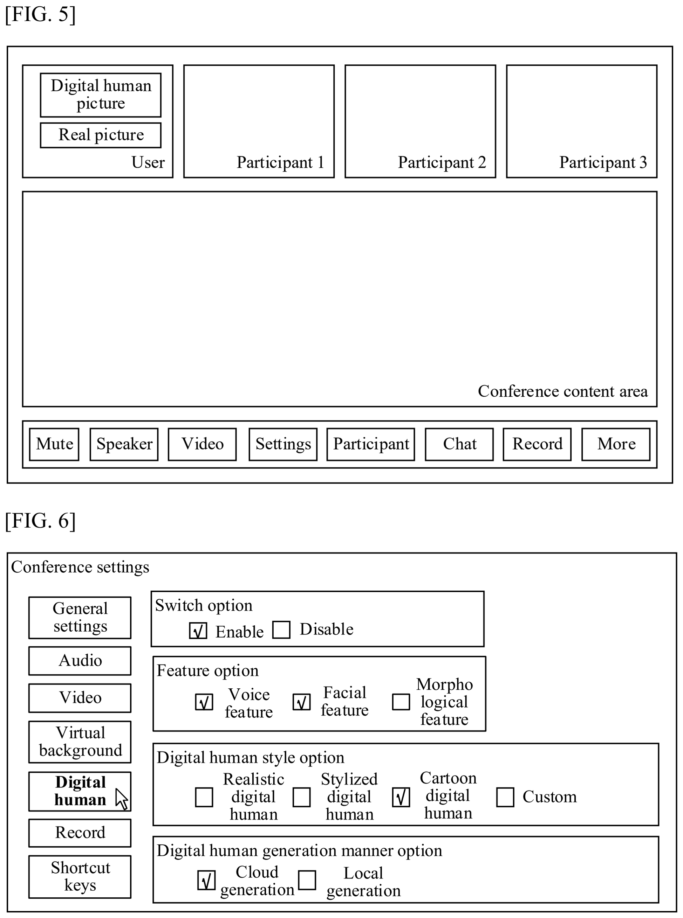

FIG. 5 shows an example picture layout of an online conference application end after a user enters a digital human conference. As shown in FIG. 5, when the user chooses to use a digital human image, the user may see a real-time digital human image of the user in a video picture frame of the user, and may also see a real-time digital human image of another participant in a video picture frame corresponding to the another user. For example, a participant 1 chooses to present a digital human video, and a real-time digital human image of the participant 1 is presented in a video picture frame of the participant 1. A participant 3 chooses to present a real person video, and a real person image of the participant 3 is presented in a video picture frame of the participant 3. In a possible embodiment, both a real person picture and a real-time digital human picture of the user may be presented in the video picture frame of the user.

FIG. 6 shows an example page layout when a user sets some configuration options related to digital human generation. As shown in FIG. 6, after the user enters a conference setting page and selects a digital human column, a UI interface provides a switch option, a feature option, a digital human style option, and a digital human generation manner option.

In a switch option column, the user may select whether to enable a digital human. After the user selects to enable the digital human, another participant can watch the real-time digital human picture of the user in the video picture frame of the user shown in FIG. 5.

In a feature option column, the user may select which features to use to drive the digital human. More feature types selected by the user indicate that a morphology of a driven digital human better matches real person performance of the user. Therefore, the digital human providing method provided in this application further includes: The source terminal receives first input information, where the first input information indicates a feature type, and the feature type includes one or more of the facial feature, the morphological feature, and the voice feature. Correspondingly, step 202 specifically includes: The source terminal extracts target feature data from the media data of the real person, where the target feature data is feature data that is used for describing the real person and that corresponds to the feature type indicated by the first input information.

Using FIG. 6 as an example, the first input information may include a selection of the user in the feature option column. When the user selects the voice feature and the facial feature, the source terminal extracts the voice feature from the audio of the real person, extracts the facial feature from the video of the real person, and then transmits the feature data including the voice feature and the facial feature to the cloud for driving the digital human. When the user selects only the facial feature, the source terminal only needs to extract, from the video of the real person, the feature data including the facial feature, and transmits the feature data to the cloud for driving the digital human.

In a digital human style option column, the user may select a style of the digital human in a generated digital human video. Therefore, the digital human providing method in this application further includes: The cloud server obtains second input information on the source terminal, where the second input information indicates a style of the digital human. Correspondingly, step 204 specifically includes: The cloud server generates media data of a digital human in a corresponding style based on the feature data, the multimodal AI-driven model, and the second input information.

Using FIG. 6 as an example, the second input information may include a selection of the user in a digital human style option column. The digital human asset library on the cloud provides digital humans of a plurality of styles, including a realistic digital human, a stylized digital human, and a cartoon digital human, and a morphology of the digital human may be of 2D or 3D. For example, when the user selects a cartoon digital human in the digital human style option column, the cloud invokes the cartoon digital human from the digital human asset library, and inputs the cartoon digital human and the feature data into the multimodal AI-driven model to generate media data of the cartoon digital human. In addition, after the user selects the cartoon digital human option, a plurality of cartoon digital human images may be further presented on the UI interface for the user to determine which specific cartoon digital human to select.

The digital human providing method in this application further includes: The cloud server obtains input information on the destination terminal, where the input information indicates that the media data of the digital human is generated by the cloud server or the destination terminal. Using FIG. 6 as an example, the input information on the destination terminal may include a selection of the user in a digital human generation manner option column. Corresponding to the intelligent forwarding capability of the real-time interaction cloud service module described in the foregoing system architecture part, when the user B selects cloud generation in the digital human generation option column, the cloud performs the digital human providing method according to the foregoing first implementation procedure. To be specific, the cloud generates the media data of the digital human by using the feature data sent by the source terminal 101, and then transmits the media data of the digital human to the destination terminal 103. When the user B selects local generation in the digital human generation option column, the cloud performs the digital human providing method according to a second implementation procedure described below.

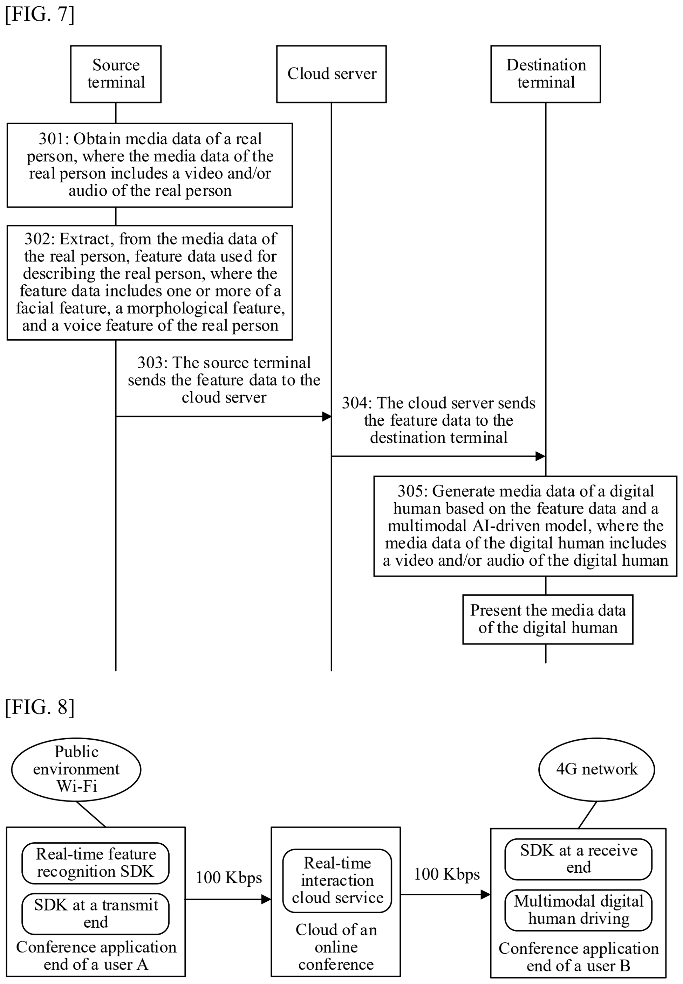

FIG. 7 shows a second implementation procedure of a digital human providing method according to this application, including the following step 301 to step 305.

Step 301: A source terminal obtains media data of a real person, where the media data of the real person includes a video and/or audio of the real person.

Step 302: The source terminal extracts, from the media data of the real person, feature data used for describing the real person, where the feature data includes one or more of a facial feature, a morphological feature, and a voice feature of the real person. The facial feature and the morphological feature of the real person are extracted from the video of the real person, and the voice feature of the real person is extracted from the audio of the real person.

Step 303: The source terminal sends the feature data to a cloud server.

Step 304: The cloud server sends the feature data to a destination terminal.

Step 305: The destination terminal generates media data of a digital human based on the feature data and a multimodal AI-driven model, where the media data of the digital human includes a video and/or audio of the digital human.

When the cloud performs the digital human providing method according to the second implementation procedure, before the cloud server sends the feature data to the destination terminal, the method further includes:

The cloud server obtains input information on the destination terminal, where the input information indicates that the media data of the digital human is generated by the destination terminal; and
the cloud server determines that the destination terminal has a digital human generation capability.

Specifically, FIG. 6 is used as an example. When the user B selects the local generation in the digital human generation manner option, a dialog box for performing performance check on the destination terminal further pops up on the UI interface, to determine whether the destination terminal has the digital human generation capability. After the cloud server determines that the destination terminal has the digital human generation capability, the cloud performs the digital human providing method according to the second implementation procedure.

A difference between the second implementation procedure and the first implementation procedure lies only in that, after receiving the feature data sent by the source terminal, the cloud transparently transmits the feature data to the destination terminal directly, and the destination terminal drives the digital human by using the feature data. Therefore, for a specific implementation of each step in the second implementation procedure, refer to the specific implementation of the first implementation procedure. Details are not described in this application again.

The following uses an online conference scenario shown in FIG. 8 as an example to describe network transmission advantages of the second implementation procedure of the digital human providing method. As shown in FIG. 8, a network used by a user A to access an online conference is the same as the network shown in FIG. 4. However, a user B accesses the online conference over a 4G network, the network is in a poor state, and downlink transmission bandwidth is also limited. In addition, in the scenario shown in FIG. 8, because a conference application end of the user B is deployed on a PC with a high-performance GPU, the conference application end of the user B includes a multimodal digital human driving module, so that the user B can generate a video of a digital human based on feature data by using AI computing power of a local device.

After the conference starts, first, the feature data extracted by the source terminal may quickly arrive at the cloud in a lossless manner. Then, considering that the conference application end of the user B has a digital human generation capability, the cloud directly forwards the received feature data to the conference application end of the user B, so that bandwidth required for downlink transmission is also reduced to approximately 100 Kbps. Because the bandwidth required for the downlink transmission of the feature data is very small, even though the network of the user B is in a poor state, the feature data can quickly arrive at the destination terminal in a lossless manner, and then the destination terminal may generate a high-definition digital human video locally based on the feature data. Finally, when both an uplink transmission network and a downlink transmission network are in a poor state, the user B can still watch a high-definition digital human picture of the user A, so that conference experience of the user B is ensured.

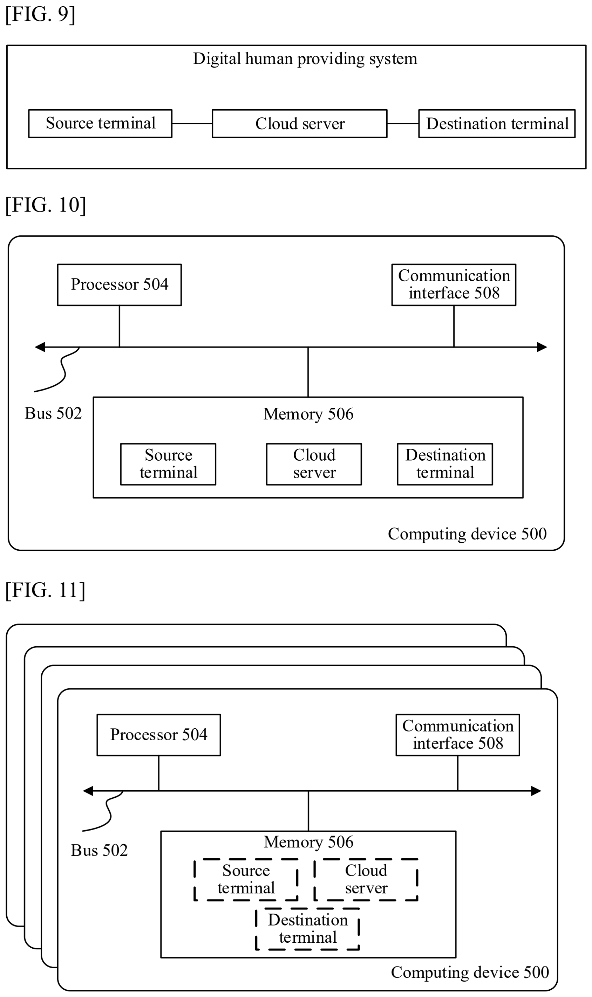

This application further provides a digital human providing system shown in FIG. 9. The system includes a source terminal, a cloud server, and a destination terminal. The source terminal is configured to obtain media data of a real person, where the media data of the real person includes a video and/or audio of the real person. The source terminal is further configured to extract, from the media data of the real person, feature data used for describing the real person, where the feature data includes one or more of a facial feature, a morphological feature, and a voice feature of the real person, the facial feature and the morphological feature of the real person are extracted from the video of the real person, and the voice feature of the real person is extracted from the audio of the real person. The source terminal is further configured to send the feature data to the cloud server. The cloud server is configured to generate media data of a digital human based on the feature data and a multimodal AI-driven model, where the media data of the digital human includes a video and/or audio of the digital human. The cloud server is further configured to send the media data of the digital human to the destination terminal.

In a possible implementation, the source terminal is specifically configured to: obtain the video of the real person based on a specific period; and extract, from the video of the real person, the feature data used for describing the real person, where the feature data includes one or both of a change of the facial feature of the real person and a change of the morphological feature of the real person.

In a possible implementation, before the cloud server is configured to generate the media data of the digital human based on the feature data and the multimodal AI-driven model, the cloud server is further configured to obtain input information on the destination terminal, where the input information indicates that the media data of the digital human is generated by the cloud server.

In a possible implementation, the source terminal is further configured to receive first input information, where the first input information indicates a feature type, and the feature type includes one or more of the facial feature, the morphological feature, and the voice feature. That the source terminal is configured to extract, from the media data of the real person, the feature data used for describing the real person specifically includes: The source terminal is configured to extract target feature data from the media data of the real person, where the target feature data is feature data that is used for describing the real person and that corresponds to the feature type indicated by the first input information.

In a possible implementation, the cloud server is further configured to obtain second input information on the source terminal, where the second input information indicates a style of the digital human. That the cloud server is configured to generate the media data of the digital human based on the feature data and the multimodal AI-driven model specifically includes: The cloud server is configured to generate media data of a digital human in a corresponding style based on the feature data, the multimodal AI-driven model, and the second input information.

In a possible implementation, the cloud server is specifically configured to: determine a transmission bit rate of the video of the digital human based on a network state of the destination terminal; encode the video of the digital human based on the transmission bit rate of the video of the digital human, where a definition of a first area is different from a definition of a second area in a picture of an encoded video of the digital human; and send the encoded video of the digital human to the destination terminal.

Specifically, for specific implementation of various operations of a digital human providing method performed by the digital human providing system, refer to descriptions of related content of the first implementation procedure in the foregoing method embodiment. Details are not described herein again.

This application further provides another digital human providing system. The system includes a source terminal, a cloud server, and a destination terminal. The source terminal is configured to obtain media data of a real person, where the media data of the real person includes a video and/or audio of the real person. The source terminal is further configured to extract, from the media data of the real person, feature data used for describing the real person, where the feature data includes one or more of a facial feature, a morphological feature, and a voice feature of the real person, the facial feature and the morphological feature of the real person are extracted from the video of the real person, and the voice feature of the real person is extracted from the audio of the real person. The source terminal is further configured to send the feature data to the cloud server. The cloud server is configured to send the feature data to the destination terminal. The destination terminal is configured to generate media data of a digital human based on the feature data and a multimodal AI-driven model, where the media data of the digital human includes a video and/or audio of the digital human.

In a possible implementation, the source terminal is specifically configured to: obtain the video of the real person based on a specific period; and extract, from the video of the real person, the feature data used for describing the real person, where the feature data includes one or both of a change of the facial feature of the real person and a change of the morphological feature of the real person.

In a possible implementation, before the cloud server is configured to send the feature data to the destination terminal, the cloud server is further configured to: obtain input information on the destination terminal, where the input information indicates that the media data of the digital human is generated by the destination terminal; and determine that the destination terminal has a digital human generation capability.

In a possible implementation, the source terminal is further configured to receive first input information, where the first input information indicates a feature type, and the feature type includes one or more of the facial feature, the morphological feature, and the voice feature. That the source terminal is configured to extract, from the media data of the real person, the feature data used for describing the real person specifically includes: The source terminal is configured to extract target feature data from the media data of the real person, where the target feature data is feature data that is used for describing the real person and that corresponds to the feature type indicated by the first input information.

Specifically, for specific implementation of various operations of a digital human providing method performed by the digital human providing system, refer to descriptions of related content of the second implementation procedure in the foregoing method embodiment. Details are not described herein again.

In embodiments of this application, the source terminal, the destination terminal, and the cloud server in the digital human providing system may be implemented by using software, or may be implemented by using hardware. The following describes an example of an implementation of the cloud server, which may serve as a reference for implementations of the source terminal and the destination terminal.

The cloud server is used as an example of a software functional unit, and the cloud server may include code being run on a computing instance. The computing instance may be at least one of computing devices such as a physical host (computing device), a virtual machine, and a container. Further, there may be one or more computing devices. For example, the cloud server may include code being run on a plurality of hosts, virtual machines, or containers. It should be noted that the plurality of hosts, virtual machines, or containers used to run the code may be distributed in a same AZ, or may be distributed in different AZs. Each AZ includes one data center or a plurality of data centers that are geographically close to each other. The plurality of hosts, virtual machines, or containers used to run the code may be distributed in a same region, or may be distributed in different regions. Generally, one region may include a plurality of AZs, and a VPC is disposed in one region. A communication gateway needs to be provided in each VPC for communication between two VPCs in a same region or between VPCs in different regions. Interconnection between VPCs is implemented through the communication gateway.

Similarly, the plurality of hosts, virtual machines, or containers used to run the code may be distributed on a same VPC, or may be distributed on a plurality of VPCs. Generally, one region may include a plurality of AZs.

The cloud server is used as an example of a hardware functional unit, and the cloud server may include at least one computing device, for example, a server. Alternatively, the cloud server may be a device implemented by using an ASIC or a PLD, or the like. The PLD may be implemented by a CPLD, an FPGA, a GAL, or any combination thereof.

A plurality of computing devices included in the cloud server may be distributed in a same AZ, or may be distributed in different AZs. The plurality of computing devices included in the cloud server may be distributed in a same region, or may be distributed in different regions. Similarly, the plurality of computing devices included in the cloud server may be distributed in a same VPC, or may be distributed in a plurality of VPCs. The plurality of computing devices may be any combination of computing devices such as a server, an ASIC, a PLD, a CPLD, an FPGA, and GAL.

This application further provides a computing device 500. FIG. 10 is a diagram of a structure of the computing device 500. The computing device 500 may be the source terminal, the destination terminal, or the cloud server in the foregoing embodiments, and includes a bus 502, a processor 504, a memory 506, and a communication interface 508. The processor 504, the memory 506, and the communication interface 508 communicate with each other through the bus 502. The computing device 500 may be a server or a terminal device. It should be understood that quantities of processors and memories in the computing device 500 are not limited in this application.

The bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 10. However, this does not indicate that there is only one bus or only one type of bus. The bus 502 may include a path for transferring information between various components (for example, the memory 506, the processor 504, and the communication interface 508) of the computing device 500.

The processor 504 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 506 may include a volatile memory (volatile memory), for example, a random access memory (random access memory, RAM). The memory 506 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 506 stores executable program code, and the processor 504 executes the executable program code to separately implement functions of the source terminal, the destination terminal, or the cloud server, so as to implement the digital human providing method. In other words, the memory 506 stores instructions used for performing the digital human providing method.

The communication interface 508 uses a transceiver module, for example, but not limited to, a network interface card or a transceiver, to implement communication between the computing device 500 and another device or a communication network.

This application further provides a computing device cluster. FIG. 11 is a diagram of the computing device cluster. The computing device cluster may implement the digital human providing method in this application according to the first or second implementation procedure in the method embodiments. As shown in FIG. 11, the computing device cluster includes at least one computing device 500 shown in FIG. 10. The computing device 500 may be a server, for example, a central server, an edge server, or a local server in a local data center. In some embodiments, the computing device may alternatively be a terminal device, for example, a desktop computer, a notebook computer, or a smartphone.

Memories 506 in one or more computing devices 500 in the computing device cluster may store instructions used for performing the digital human providing method. When at least one computing device in the computing device cluster executes the instructions, the computing device cluster may be caused to implement the digital human providing method according to the method embodiments.

In some possible implementations, the memories 506 in the one or more computing devices 500 in the computing device cluster may alternatively separately store some instructions used for performing the digital human providing method. In other words, a combination of one or more computing devices 500 may jointly execute the instructions used for implementing the digital human providing method.

It should be noted that memories 506 in different computing devices 500 in the computing device cluster may store different instructions separately used for performing some functions of a digital human providing system. In other words, the instructions stored in the memories 506 in different computing devices 500 may separately implement functions of a source terminal, a cloud server, or a destination terminal.

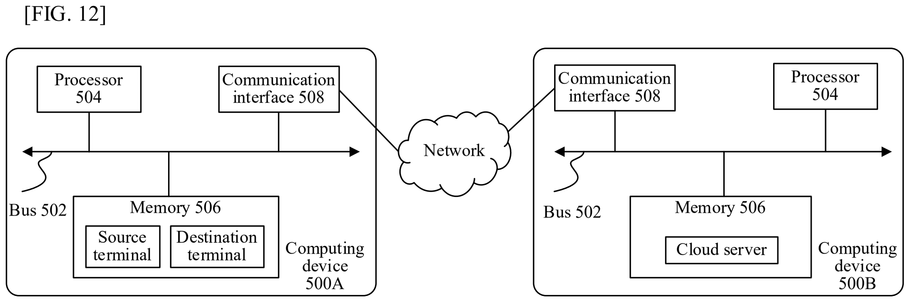

In some possible implementations, the one or more computing devices in the computing device cluster may be connected over a network. The network may be a wide area network, a local area network, or the like. FIG. 12 shows a possible implementation. As shown in FIG. 12, two computing devices 500A and 500B are connected over a network. Specifically, each computing device is connected to the network through a communication interface of the computing device. In this type of possible implementation, a memory 506 in the computing device 500A stores instructions used for performing functions of a source terminal and a destination terminal. In addition, a memory 506 in the computing device 500B stores instructions used for performing functions of a cloud server.

It should be understood that functions of the computing device 500A shown in FIG. 12 may alternatively be completed by a plurality of computing devices 500. Similarly, functions of the computing device 500B may alternatively be completed by a plurality of computing devices 500.

This application further provides a computer program product including instructions. The computer program product may be software or a program product that includes the instructions and that can run on a computing device or can be stored in any usable medium. When the computer program product runs on at least one computing device, the at least one computing device is caused to perform the digital human providing method according to the first or second implementation procedure in the method embodiments.

This application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform the digital human providing method according to the first or second implementation procedure in the method embodiments.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications or equivalent replacements do not cause corresponding technical solutions to depart from the protection scope of the technical solutions in embodiments of the present invention.

## Claims

1. A digital human providing method, wherein the method comprises:
obtaining, by a source terminal, media data of a real person, wherein the media data of the real person comprises a video and/or audio of the real person;
extracting, by the source terminal from the media data of the real person, feature data used for describing the real person, wherein the feature data comprises one or more of a facial feature, a morphological feature, and a voice feature of the real person, the facial feature and the morphological feature of the real person are extracted from the video of the real person, and the voice feature of the real person is extracted from the audio of the real person;
sending, by the source terminal, the feature data to a cloud server;
generating, by the cloud server, media data of a digital human based on the feature data and a multimodal AI-driven model, wherein the media data of the digital human comprises a video and/or audio of the digital human; and
sending, by the cloud server, the media data of the digital human to a destination terminal.

2. The method according to claim 1, wherein
obtaining, by the source terminal, the media data of the real person comprises: obtaining, by the source terminal, the video of the real person based on a specific period; and
extracting, by the source terminal from the media data of the real person, the feature data used for describing the real person comprises: extracting, by the source terminal from the video of the real person, the feature data used for describing the real person, wherein the feature data comprises one or both of a change of the facial feature of the real person and a change of the morphological feature of the real person.

3. The method according to claim 1 or 2, wherein before generating, by the cloud server, the media data of the digital human based on the feature data and the multimodal AI-driven model, the method further comprises:
obtaining, by the cloud server, input information on the destination terminal, wherein the input information indicates that the media data of the digital human is generated by the cloud server.

4. The method according to any one of claims 1 to 3, wherein the method further comprises:
receiving, by the source terminal, first input information, wherein the first input information indicates a feature type, and the feature type comprises one or more of the facial feature, the morphological feature, and the voice feature; and
extracting, by the source terminal from the media data of the real person, the feature data used for describing the real person comprises:
extracting, by the source terminal, target feature data from the media data of the real person, wherein the target feature data is feature data that is used for describing the real person and that corresponds to the feature type indicated by the first input information.

5. The method according to any one of claims 1 to 4, wherein the method further comprises:
obtaining, by the cloud server, second input information on the source terminal, wherein the second input information indicates a style of the digital human; and
generating, by the cloud server, the media data of the digital human based on the feature data and the multimodal AI-driven model comprises:
generating, by the cloud server, media data of a digital human in a corresponding style based on the feature data, the multimodal AI-driven model, and the second input information.

6. The method according to any one of claims 1 to 5, wherein sending, by the cloud server, the video of the digital human to the destination terminal comprises:
determining, by the cloud server, a transmission bit rate of the video of the digital human based on a network state of the destination terminal;
encoding, by the cloud server, the video of the digital human based on the transmission bit rate of the video of the digital human, wherein a definition of a first area is different from a definition of a second area in a picture of an encoded video of the digital human; and
sending, by the cloud server, the encoded video of the digital human to the destination terminal.

7. A digital human providing method, wherein the method comprises:
obtaining, by a source terminal, media data of a real person, wherein the media data of the real person comprises a video and/or audio of the real person;
extracting, by the source terminal from the media data of the real person, feature data used for describing the real person, wherein the feature data comprises one or more of a facial feature, a morphological feature, and a voice feature of the real person, the facial feature and the morphological feature of the real person are extracted from the video of the real person, and the voice feature of the real person is extracted from the audio of the real person;
sending, by the source terminal, the feature data to a cloud server;
sending, by the cloud server, the feature data to a destination terminal; and
generating, by the destination terminal, media data of a digital human based on the feature data and a multimodal AI-driven model, wherein the media data of the digital human comprises a video and/or audio of the digital human.

8. The method according to claim 7, wherein obtaining, by the source terminal, the media data of the real person comprises: obtaining, by the source terminal, the video of the real person based on a specific period; and
extracting, by the source terminal from the media data of the real person, the feature data used for describing the real person comprises:
extracting, by the source terminal from the video of the real person, the feature data used for describing the real person, wherein the feature data comprises one or both of a change of the facial feature of the real person and a change of the morphological feature of the real person.

9. The method according to claim 7 or 8, wherein before sending, by the cloud server, the feature data to the destination terminal, the method further comprises:
obtaining, by the cloud server, input information on the destination terminal, wherein the input information indicates that the media data of the digital human is generated by the destination terminal; and
determining, by the cloud server, that the destination terminal has a digital human generation capability.

10. The method according to any one of claims 7 to 9, wherein the method further comprises:
receiving, by the source terminal, first input information, wherein the first input information indicates a feature type, and the feature type comprises one or more of the facial feature, the morphological feature, and the voice feature; and
extracting, by the source terminal from the media data of the real person, the feature data used for describing the real person comprises:
extracting, by the source terminal, target feature data from the media data of the real person, wherein the target feature data is feature data that is used for describing the real person and that corresponds to the feature type indicated by the first input information.

11. A digital human providing system, wherein the system comprises a source terminal, a cloud server, and a destination terminal, wherein
the source terminal is configured to obtain media data of a real person, wherein the media data of the real person comprises a video and/or audio of the real person;
the source terminal is further configured to extract, from the media data of the real person, feature data used for describing the real person, wherein the feature data comprises one or more of a facial feature, a morphological feature, and a voice feature of the real person, the facial feature and the morphological feature of the real person are extracted from the video of the real person, and the voice feature of the real person is extracted from the audio of the real person;
the source terminal is further configured to send the feature data to the cloud server;
the cloud server is configured to generate media data of a digital human based on the feature data and a multimodal AI-driven model, wherein the media data of the digital human comprises a video and/or audio of the digital human; and
the cloud server is further configured to send the media data of the digital human to the destination terminal.

12. The system according to claim 11, wherein the source terminal is specifically configured to:
obtain the video of the real person based on a specific period; and
extract, from the video of the real person, the feature data used for describing the real person, wherein the feature data comprises one or both of a change of the facial feature of the real person and a change of the morphological feature of the real person.

13. The system according to claim 11 or 12, wherein before the cloud server is configured to generate the media data of the digital human based on the feature data and the multimodal AI-driven model, the cloud server is further configured to:
obtain input information on the destination terminal, wherein the input information indicates that the media data of the digital human is generated by the cloud server.

14. The system according to any one of claims 11 to 13, wherein
the source terminal is further configured to receive first input information, wherein the first input information indicates a feature type, and the feature type comprises one or more of the facial feature, the morphological feature, and the voice feature; and
that the source terminal is configured to extract, from the media data of the real person, the feature data used for describing the real person specifically comprises:
the source terminal is configured to extract target feature data from the media data of the real person, wherein the target feature data is feature data that is used for describing the real person and that corresponds to the feature type indicated by the first input information.

15. The system according to any one of claims 11 to 14, wherein
the cloud server is further configured to obtain second input information on the source terminal, wherein the second input information indicates a style of the digital human; and
that the cloud server is configured to generate the media data of the digital human based on the feature data and the multimodal AI-driven model specifically comprises:
the cloud server is configured to generate media data of a digital human in a corresponding style based on the feature data, the multimodal AI-driven model, and the second input information.

16. The system according to any one of claims 11 to 15, wherein the cloud server is specifically configured to:
determine a transmission bit rate of the video of the digital human based on a network state of the destination terminal;
encode the video of the digital human based on the transmission bit rate of the video of the digital human, wherein a definition of a first area is different from a definition of a second area in a picture of an encoded video of the digital human; and
send the encoded video of the digital human to the destination terminal.

17. A digital human providing system, wherein the system comprises a source terminal, a cloud server, and a destination terminal, wherein
the source terminal is configured to obtain media data of a real person, wherein the media data of the real person comprises a video and/or audio of the real person;
the source terminal is further configured to extract, from the media data of the real person, feature data used for describing the real person, wherein the feature data comprises one or more of a facial feature, a morphological feature, and a voice feature of the real person, the facial feature and the morphological feature of the real person are extracted from the video of the real person, and the voice feature of the real person is extracted from the audio of the real person;
the source terminal is further configured to send the feature data to the cloud server;
the cloud server is configured to send the feature data to the destination terminal; and
the destination terminal is configured to generate media data of a digital human based on the feature data and a multimodal AI-driven model, wherein the media data of the digital human comprises a video and/or audio of the digital human.

18. The system according to claim 17, wherein the source terminal is specifically configured to:
obtain the video of the real person based on a specific period; and
extract, from the video of the real person, the feature data used for describing the real person, wherein the feature data comprises one or both of a change of the facial feature of the real person and a change of the morphological feature of the real person.

19. The system according to claim 17 or 18, wherein before the cloud server is configured to send the feature data to the destination terminal, the cloud server is further configured to:
obtain input information on the destination terminal, wherein the input information indicates that the media data of the digital human is generated by the destination terminal; and
determine that the destination terminal has a digital human generation capability.

20. The system according to any one of claims 17 to 19, wherein
the source terminal is further configured to receive first input information, wherein the first input information indicates a feature type, and the feature type comprises one or more of the facial feature, the morphological feature, and the voice feature; and
that the source terminal is configured to extract, from the media data of the real person, the feature data used for describing the real person specifically comprises:
the source terminal is configured to extract target feature data from the media data of the real person, wherein the target feature data is feature data that is used for describing the real person and that corresponds to the feature type indicated by the first input information.

21. A computing device cluster, comprising at least one computing device, wherein each computing device comprises a processor and a memory; and
the processor of the at least one computing device is configured to execute instructions stored in the memory of the at least one computing device, to cause the computing device cluster to perform the digital human providing method according to any one of claims 1 to 6.

22. A computing device cluster, comprising at least one computing device, wherein each computing device comprises a processor and a memory; and
the processor of the at least one computing device is configured to execute instructions stored in the memory of the at least one computing device, to cause the computing device cluster to perform the digital human providing method according to any one of claims 7 to 10.

23. A computer program product comprising instructions, wherein when the instructions are run by a computing device cluster, the computing device cluster is caused to perform the digital human providing method according to any one of claims 1 to 6.

24. A computer program product comprising instructions, wherein when the instructions are run by a computing device cluster, the computing device cluster is caused to perform the digital human providing method according to any one of claims 7 to 10.

25. A computer-readable storage medium, comprising computer program instructions, wherein when the computer program instructions are executed by a computing device cluster, the computing device cluster performs the digital human providing method according to any one of claims 1 to 6.

26. A computer-readable storage medium, comprising computer program instructions, wherein when the computer program instructions are executed by a computing device cluster, the computing device cluster performs the digital human providing method according to any one of claims 7 to 10.
